# EUROPÄISCHE PATENTSCHRIFT

(11) **EP 2 903 878 B1**
(45) Veröffentlichungstag und Bekanntmachung des Hinweises auf die Patenterteilung: **21.09.2022**
(21) Anmeldenummer: 13798550.3
(22) Anmeldetag: 27.09.2013
(51) Int. Cl.: G08G 1/0967, B60W 50/00

(54) **VERFAHREN ZUR UNTERSTÜTZUNG EINES FAHRERS AN EINER AMPEL FÜR EIN FAHRZEUG**
METHOD FOR ASSISTING A DRIVER AT A TRAFFIC LIGHT FOR A VEHICLE
PROCÉDÉ D'AIDE À LA CONDUITE À UN FEU DE SIGNALISATION POUR VÉHICULE

(30) Priorität: 01.10.2012 DE 102012109297
(43) Veröffentlichungstag der Anmeldung: 12.08.2015
(73) Patentinhaber: Continental Autonomous Mobility Germany GmbH, 85057 Ingolstadt (DE)
(72) Erfinder: LÜKE, Stefan, 61191 Rosbach von der Höhe (DE); HEGEMANN, Stefan, 88239 Wangen (DE); KOMAR, Matthias, 60433 Frankfurt (DE)
(74) Vertreter: Continental Corporation
(86) Internationale Anmeldenummer: PCT/DE2013/200193
(87) Internationale Veröffentlichungsnummer: WO 2014/053134

(56) Entgegenhaltungen:
- EP-A2- 1 845 003
- EP-A2- 2 093 738
- DE-A1-102005 022 676
- DE-A1-102006 000 077
- DE-A1-102010 039 418
- US-A1- 2004 083 049
- US-A1- 2010 106 413
- US-A1- 2011 169 625

## Beschreibung

Bekannt sind Systeme zur Ampelerkennung für ein Fahrzeug. Die Position und Stellung einer Ampel kann beispielsweise mit einem Umfelderfassungssensor, insbesondere einem Kamerasensorsystem, erfasst oder via Funk vom Verkehrszeichen direkt oder von anderen Fahrzeugen (c2c) zum Egofahrzeug übertragen werden.

Weiterhin sind im Stand der Technik Systeme zur Erkennung der Fahreraufmerksamkeit mit einem Kamerasensorsystem im Innenraum eines Fahrzeugs bekannt.

EP 1 845 003 A2 offenbart ein Fahrerassistenzsystem für ein Kraftfahrzeug mit einer Umfeldsensorik zum Erfassen eines Verkehrsumfelds, einer Fahrzeugsensorik zum Erfassen eines Fahrzeugzustands, einer intelligenten Situationsbewertungseinrichtung und einer Ausgabeeinrichtung zur Ausgabe eines Anfahrhinweises an den Fahrer. Die Umfeld- und Fahrzeugsensorik kann einen Wartezustand des Fahrzeugs sowie die Beendigung dieses Wartezustands erkennen und dann einen Anfahrhinweis auszugeben, wenn der Fahrer nicht anfährt.

US 2011/169625 A1 zeigt eine Vorrichtung zum sicheren Betrieb eines Kraftfahrzeugs mit einem Umfeldsensor, der Gefährdungen im Fahrzeugumfeld erkennt. Ein Aufmerksamkeitsidentifikationsmodul überwacht den Fahrer und erkennt, ob der Fahrer die Gefährdung wahrgenommen hat. Bei nicht wahrgenommen Gefährdung kann ein Warnsignal ausgegeben werden.

DE 10 2006 000 077 A1 offenbart eine Sicherheitsbedingungsprüfzustands-Bewertungseinheit, die einen Sicherheitsbedingungsprüfzustand eines Fahrers vor dem Eintreten in eine Kreuzung auf der Basis von Kreuzungsinformation als auch von Sicherheitsbedingungsprüfmaßnahmen bewertet. Eine bestimmte Information zur Unterstützung des Fahrers des Fahrzeugs auf der Kreuzung wird dem Fahrer auf der Basis eines Bewertungsergebnisses der Sicherheitsbedingungsprüfzustands-Bewertungseinheit mitgeteilt.

EP 2 093 738 A2 beschreibt eine Steuer- und Auswerteinheit, der Routen-Informationen zum aktuellen oder geplanten Fahrweg eines Fahrzeugs zugeführt werden, wobei an den aktuellen oder geplanten Fahrweg des Fahrzeugs angepasste Informationen angezeigt werden, wenn für verschiedene Fahrwegmöglichkeiten verschiedene Verkehrszeichen und/oder verschiedene Verkehrseinrichtungen erfasst werden.

DE 10 2005 022 676 A1 offenbart eine Anzeigevorrichtung für einen Geschwindigkeitsregler mit Abstandsregelfunktion und Stop & Go Funktion, mit einem ersten Anzeigeelement zur Anzeige des Betriebsstatus des Geschwindigkeitsreglers und einem zweiten Anzeigeelement zur Anzeige, dass ein Zielobjekt für die Abstandsregelung erfasst worden ist, wobei die Vorrichtung dazu ausgebildet ist, unterschiedliche Stillstandszustände des Geschwindigkeitsreglers durch unterschiedliche Zustandskombinationen der ersten und zweiten Anzeigeelemente anzuzeigen.

Die US 2004/0083049 A1 beschreibt ein Fahrzeug mit einem Sensor zum Erkennen eines aktuellen Status eines Ampelzeichens. Hierzu wird ein Funksignal von der Ampel an den Sensor übertragen.

Aus der US 2010/0106413 A1 ist ein Verfahren bekannt, mittels dem bestimmt wird, wann einem Fahrer eines Fahrzeuges eine Alarmwarnung auszugeben ist, die sich auf eine bevorstehende Anhaltestelle auf einer Fahrstraße bezieht. Hierzu werden Drahtlos-Nachrichten empfangen, die von einer entfernten Entität an das Fahrzeug übertragen werden.

Ferner beschreibt die DE 10 2010 039 418 A1 ein Verfahren zur Steuerung oder Regelung eines vom Fahrer anwählbaren Anfahrvorgangs eines Fahrzeugs. Das Fahrzeug weist hierzu eine Car-to-Infrastructure Kommunikationseinrichtung auf, mittels der Daten von einer Verkehrsampel empfangen werden und eine Beschleunigungsphase während des Anfahrvorgangs abhängig von den empfangenen Daten automatisch gewählt wird.

Es ist die Aufgabe der hier vorliegenden Erfindung, ein Verfahren zur Unterstützung eines Fahrers an einer Ampel anzugeben.

Diese Aufgabe wird mit den Merkmalen der unabhängigen Ansprüche 1 und 6 gelöst.

Ein wesentlicher Gedanke der Erfindung ist es, einen unaufmerksamen Fahrer in einer Ampelsituation zu unterstützen, insbesondere ein unerwünschtes Anfahren an einer Ampelanlage zu unterbinden.

Das Verfahren findet Anwendung in einem Fahrerassistenzsystem, das Mittel zur Erkennung zumindest einer Ampel und der Ampelphase vorsieht. Insbesondere ist zu diesem Zweck ein Kamerasensorsystem oder ein Funkempfänger zum Empfang von Funksignalen anderer Fahrzeuge (c2c-Kommunikation) oder von Funksignalen direkt von Verkehrszeichen vorgesehen. Weiterhin umfasst das Fahrerassistenzsystem Mittel zur Erkennung der Fahreraufmerksamkeit. Die Fahreraufmerksamkeit kann z.B. mit einem Kamerasystem im Fahrzeuginnenraum erfasst werden. Das Kamerasystem kann auch die Blickrichtung des Fahrers erfassen und damit z.B. feststellen, ob dieser die Ampel im Blickfeld hat oder nicht. Darüber hinaus kann über eine Hands-Off Erkennung oder über die Überwachung der Aktivitäten des Fahrers an den im Fahrzeug verfügbaren Multimediasystemen (z.B. Surfen im Internet) auf die Aufmerksamkeit des Fahrers geschlossen werden. Das Fahrerassistenzsystem umfasst zudem eine Steuereinheit. Die Steuereinheit gibt, wenn ein unaufmerksamer Fahrer erkannt wird, in Abhängigkeit von der Ampelphase ein Signal zur Warnung aus. Dafür sind Mittel für eine optische, akustische oder haptische Warnung eines Fahrers vorgesehen. Alternativ oder zusätzlich wird ein Eingriff in eine Längsdynamikregelung des Egoahrzeugs durchgeführt.

Erfindungsgemäß wird das Umfeld eines Fahrzeugs mit Mitteln zur Umfelderfassung erfasst. Mittel zur Umfelderfassung sind z.B. Radar-, Lidar-, Kamera-, Navigationssystem oder Funkkommunikationssysteme mit anderen Verkehrsteilnehmern (c2c) oder eine Kombination von zumindest zwei der genannten. Vorzugsweise sind die Mittel zur Ampelerkennung und die Mittel zur Umfelderfassung als ein Kamerasystem ausgebildet. Mit den Mittel zur Umfelderfassung wird die Position bzw. Lage von Fahrspuren und/ oder Verkehrszeichen zum Egofahrzeug erfasst. Basierend darauf wird eine Relevanz der Ampel für das Egofahrzeug ermittelt. Z.B. hat eine entfernte Ampel, deren Gültigkeitsbereich noch nicht vom Egofahrzeug erreicht wurde, keine Relevanz. Insbesondere bei Ampeln (Links- bzw. Rechtsabbiegerampeln) oder Verkehrszeichen (grüner Pfeil für Rechtsabbieger), deren Gültigkeit von der Fahrspur abhängen kann, ist die Ermittlung der Relevanz der Ampelanlage in Abhängigkeit von der Fahrspur ebenfalls von Bedeutung.

Ferner wird die Relevanz der Ampel in Abhängigkeit von einer wahrscheinlichen Route des Egofahrzeugs bestimmt. Die wahrscheinliche Route wird z.B. durch einen aktivierten Fahrtrichtungsanzeiger (Blinker) oder einer berechneten Route eines Navigationsgeräts erkannt. Dieses Vorgehen ist vorteilhaft bei Links- bzw. Rechtsabbiegerampeln oder Verkehrszeichen, die nur für eine bestimmte Fahrtrichtung gelten (grüner Pfeil für Rechtsabbieger).

In einer bevorzugten Ausgestaltung der Erfindung ist das Signal zum Eingriff in Regelung der Längsdynamik derart ausgebildet, dass eine momentane Beschleunigung des Egoahrzeugs verstärkt oder abgeschwächt wird oder eine Anfahrt des Egofahrzeugs verhindert wird.

Will der Fahrer z.B. trotz roter Ampel losfahren, wird die Anfahrt verhindert.

In einer bevorzugten Ausführungsform der Erfindung erfolgt eine Anfahrt an einer Ampel in dem Fall, dass eine Anfahrt verhindert wurde, nur nach Freigabe durch den Fahrer des Egofahrzeugs. Eine Freigabe erfolgt insbesondere bei Erkennung einer Betätigung eines Gaspedals, wobei die Auslenkung des Gaspedals und/oder die Betätigungsgeschwindigkeit einen Schwellwert (z.B. Kickdown) übersteigen muss.

## Patentansprüche

1. Verfahren zur Regelung eines Anfahrens eines Egofahrzeugs an einer Ampel für ein Fahrerassistenzsystem, das folgende Schritte umfasst:
- Empfangen von Funksignalen von einem Fahrzeug oder einem Verkehrszeichen,
- Erkennen zumindest einer Ampel und einer Ampelphase aus den empfangenen Funksignalen,
- Ermitteln einer Relevanz der Ampel für das Egofahrzeug, indem Umgebungsobjekte mit Mitteln zur Umfelderfassung erfasst und die Position bzw. Lage von Fahrspuren und/oder Verkehrszeichen zum Egofahrzeug bestimmt werden, und
- Erkennen der Fahreraufmerksamkeit,
wobei bei einem unaufmerksamen Fahrer in Abhängigkeit von dem Vorhandensein zumindest einer Ampel mit Relevanz für das Egofahrzeug und der zugehörigen Ampelphase in den empfangenen Funksignalen ein Signal zur Ausgabe einer Warnung oder zum Eingriff in eine Längsregelung des Egofahrzeugs ausgibt, und wobei die Fahreraufmerksamkeit anhand der Blickrichtung des Fahrers ermittelt wird, und die Relevanz der Ampel in Abhängigkeit von einer wahrscheinlichen Route des Egofahrzeugs bestimmt wird, und
(a) die wahrscheinliche Route anhand eines aktivierten Fahrtrichtungsanzeigers (Blinker) oder einer berechneten Route eines Navigationsgeräts oder eines Kamerasensorsystems zur Erkennung von Bodenpfeilen auf einer Fahrspur erkannt wird, und eine Rechtsabbiegerspur anhand von Bodenpfeilen auf einer Fahrspur mit dem Kamerasystem oder mit dem Navigationssystem erkannt wird und bei Befahren dieser Rechtsabbiegerspur das Warnsignal ausgegeben wird, wenn der Blick des Fahrers vor einem Passieren der Ampel nicht nach rechts gerichtet ist oder
(b) der wahrscheinlichen Route eine Ampelposition über, links oder rechts der Fahrbahn zugeordnet und das Warnsignal ausgegeben wird, wenn der Blick des Fahrers vor einem Passieren der Ampel nicht auf die zugeordnete Ampelposition gerichtet ist.

2. Verfahren nach Anspruch 1,
**dadurch gekennzeichnet, dass**
die Fahreraufmerksamkeit anhand der Blickrichtung des Fahrers basierend auf den Daten eines Kamerasystems im Innenraum des Egofahrzeugs ermittelt wird.

3. Verfahren nach einem der Ansprüche 1 oder 2
**dadurch gekennzeichnet, dass**
das Signal zum Eingriff in eine Längsregelung derart ausgebildet ist, dass eine momentane Beschleunigung des Egofahrzeugs verstärkt oder abgeschwächt wird.

4. Verfahren nach einem der Ansprüche 1 oder 2,
**dadurch gekennzeichnet, dass**
das Signal zum Eingriff in eine Längsregelung derart ausgebildet ist, dass eine Anfahrt des Egofahrzeugs verhindert wird.

5. Verfahren nach Anspruch 4,
**dadurch gekennzeichnet, dass**
die Anfahrt nach Freigabe durch den Fahrer des Egofahrzeugs erfolgt, wobei eine Freigabe insbesondere bei Erkennung einer Betätigung eines Gaspedals oberhalb eines Schwellwerts erkannt wird.

6. Fahrerassistenzsystem umfassend
- Mittel zum Empfangen von Funksignalen von einem Fahrzeug oder einem Verkehrszeichen,
- Mittel zur Erkennung zumindest einer Ampel und der Ampelphase aus den empfangen Funksignalen und
- Mittel zur Erkennung der Fahreraufmerksamkeit und
- Mittel zur Umfelderfassung und
- eine mit den Mitteln verbundene Auswerte- oder Steuereinheit mit einem elektronischen Speicher, auf dem ein Verfahren nach einem der vorherigen Ansprüche hinterlegt ist.

## Claims

1. Method for controlling starting of an ego vehicle at a set of traffic lights for a driver assistance system, which method comprises the following steps:
- receiving radio signals from a vehicle or a traffic sign,
- identifying at least one set of traffic lights and a traffic light phase from the received radio signals,
- determining a relevance of the traffic lights to the ego vehicle by capturing environmental objects using environmental capture means and determining the position or location of lanes and/or traffic signs with respect to the ego vehicle, and
- identifying the driver's attentiveness,
wherein, in the case of an inattentive driver, on the basis of the presence of at least one set of traffic lights relevant to the ego vehicle and the associated traffic light phase in the received radio signals, a signal for outputting a warning or for intervening in longitudinal control of the ego vehicle is output, and wherein the driver's attentiveness is determined on the basis of the driver's viewing direction, and
the relevance of the traffic lights is determined on the basis of a likely route of the ego vehicle, and
(a) the likely route is identified on the basis of an activated direction indicator (indicator) or a calculated route from a navigation device or a camera sensor system for detecting ground arrows in a lane, and a right-hand turn lane is identified on the basis of ground arrows in a lane using the camera system or using the navigation system and the warning signal is output when driving in this right-hand turn lane if the driver is not looking to the right before passing through the traffic lights, or
(b) the likely route is assigned a traffic light position above, to the left or to the right of the road and the warning signal is output if the driver is not looking at the assigned traffic light position before passing through the traffic lights.

2. Method according to Claim 1,
**characterized in that**
the driver's attentiveness is determined using the driver's viewing direction on the basis of the data from a camera system in the interior of the ego vehicle.

3. Method according to either of Claims 1 and 2,
**characterized in that**
the signal for intervening in longitudinal control is designed in such a manner that an instantaneous acceleration of the ego vehicle is increased or decreased.

4. Method according to either of Claims 1 and 2,
**characterized in that**
the signal for intervening in longitudinal control is designed in such a manner that starting of the ego vehicle is prevented.

5. Method according to Claim 4,
**characterized in that**
starting is effected after approval by the driver of the ego vehicle, wherein approval is identified, in particular, when actuation of an accelerator pedal above a threshold value is detected.

6. Driver assistance system comprising
- means for receiving radio signals from a vehicle or a traffic sign,
- means for identifying at least one set of traffic lights and the traffic light phase from the received radio signals, and
- means for identifying the driver's attentiveness, and
- means for capturing the environment, and
- an evaluation or control unit which is connected to the means and has an electronic memory in which a method according to one of the preceding claims is stored.

## Revendications

1. Procédé de régulation d'un démarrage d'un véhicule autonome objet de l'étude à un feu de circulation pour un système d'assistance au conducteur, comprenant les étapes suivantes :
- réception de signaux radioélectriques d'un véhicule ou d'un panneau de signalisation routière ;
- reconnaissance d'au moins un feu de circulation et d'une phase de feu de signalisation à partir des signaux radioélectriques reçus,
- identification d'une pertinence du feu de circulation pour le véhicule autonome objet de l'étude en détectant des objets d'environnement avec des moyens de balayage de l'environnement et en déterminant la position et/ou la situation de voies de circulation et/ou de panneaux de signalisation routière par rapport au véhicule autonome objet de l'étude, et
- reconnaissance de l'attention du conducteur,
dans le cas d'un conducteur inattentif, un signal destiné à délivrer un avertissement ou à intervenir dans une régulation longitudinale du véhicule autonome objet de l'étude étant délivré en fonction de la présence d'au moins un feu de circulation et de la phase de feu de circulation associée dans les signaux radioélectriques reçus, et
l'attention du conducteur étant identifiée à l'aide de la direction du regard du conducteur,
la pertinence du feu de circulation étant déterminée en fonction d'un itinéraire probable du véhicule autonome objet de l'étude, et
(a) l'itinéraire probable étant reconnu à l'aide d'un indicateur de direction (feu clignotant) activé ou d'un itinéraire calculé d'un appareil de navigation ou d'un système de capteurs à caméra destiné à reconnaître des flèches au sol sur une voie de circulation avec le système de caméra ou avec le système de navigation et le signal d'avertissement étant délivré en cas de déplacement sur cette voie de virage à droite lorsque le regard du conducteur n'est pas dirigé vers la droite avant de passer au niveau du feu de circulation
ou
(b) l'itinéraire probable étant associé à une position de feu de circulation au-dessus, à gauche ou à droite de la voie de circulation et le signal d'avertissement étant délivré lorsque le regard du conducteur n'est pas dirigé vers la position associée du feu de circulation avant de passer au niveau du feu de circulation.

2. Procédé selon la revendication 1, **caractérisé en ce que** l'attention du conducteur est identifiée à l'aide de la direction du regard du conducteur en se basant sur les données d'un système de caméra dans l'habitacle du véhicule autonome objet de l'étude.

3. Procédé selon l'une des revendications 1 ou 2, **caractérisé en ce que** le signal d'intervention dans une régulation longitudinale est configuré de sorte qu'une accélération momentanée du véhicule autonome objet de l'étude est amplifiée ou affaiblie.

4. Procédé selon l'une des revendications 1 ou 2, **caractérisé en ce que** le signal d'intervention dans une régulation longitudinale est configuré de sorte qu'un démarrage du véhicule autonome objet de l'étude est empêché.

5. Procédé selon la revendication 4, **caractérisé en ce que** le démarrage s'effectue après validation par le conducteur du véhicule autonome objet de l'étude, une validation étant notamment reconnue lors de la reconnaissance d'un actionnement d'une pédale d'accélérateur au-dessus d'une valeur de seuil.

6. Système d'assistance au conducteur, comprenant
- des moyens destinés à recevoir des signaux radioélectriques d'un véhicule ou d'un panneau de signalisation routière ;
- des moyens destinés à reconnaître au moins un feu de circulation et la phase de feu de signalisation à partir des signaux radioélectriques reçus et
- des moyens destinés à reconnaître l'attention du conducteur et
- des moyens destinés à balayer l'environnement et
- une unité d'interprétation ou de commande reliée aux moyens et comprenant une mémoire électronique sur laquelle est stocké un procédé selon l'une des revendications précédentes.
